# EUROPEAN PATENT APPLICATION

(11) **EP 4 776 629 A1**
(43) Date of publication of application: **15.07.2026**
(21) Application number: 24862083.3
(22) Date of filing: 06.09.2024
(51) Int. Cl.: H04N 21/431

(54) **LIVE STREAM PROCESSING METHOD AND APPARATUS, DEVICE AND STORAGE MEDIUM**

(30) Priority: 07.09.2023 CN 202311155457
(71) Applicant: BEIJING YOUZHUJU NETWORK TECHNOLOGY CO. LTD., Beijing 101299 (CN)
(72) Inventor: WANG, Li, Beijing 100028 (CN); DONG, Shihan, Beijing 100028 (CN); XIE, Zhiyao, Beijing 100028 (CN)
(74) Representative: Isarpatent
(86) International application number: PCT/CN2024/117471
(87) International publication number: WO 2025/051245

(57) **Abstract**

The present disclosure provides a live stream processing method and apparatus, a device and a storage medium. The method includes: displaying a live streaming room page of a first streamer, wherein a connected video image of the first streamer and at least one second streamer is displayed on the live streaming room page; and displaying an object information page on the live streaming room page and presenting recommended objects corresponding to the second streamer on the object information page in response to a trigger operation on the object information page.

## Description

### CROSS-REFERENCE TO RELATED APPLICATION(S)

The present application claims the benefit of the Chinese Patent Application No. 202311155457.5, filed on September 7, 2023. The entire teachings of the above-mentioned application are incorporated herein by reference.

### FIELD

The present disclosure relates to a field of data processing, and in particular to a live streaming processing method and apparatus, a device, and a storage medium.

### BACKGROUND

In the field of e-commerce, it has become increasingly common for a streamer to connect with other streamers during live streaming. With the current streamer connection feature, while a viewer is watching a streamer-connected live streaming video in a current live streaming room, if the viewer wants to view information related to a live streaming room of a connected peer streamer, such as viewing recommended objects of the connected peer streamer, the viewer has to exit the current live streaming room, and then enter the live streaming room of the connected peer streamer in order to view such information.

It can be learned that in the current streamer-connected live streaming scenario, the operation path for the viewer in the current live streaming room to view information related to the live streaming room of the connected peer streamer is relatively long, resulting in low operational efficiency.

### SUMMARY

To resolve the above technical problem, embodiments of the present disclosure provide a live streaming processing method.

According to a first aspect, the present disclosure provides a live streaming processing method. The method includes:
displaying a live streaming room page of a first streamer, wherein a connected video image of the first streamer and at least one second streamer is presented on the live streaming room page; and
displaying an object information page on the live streaming room page and presenting recommended objects corresponding to the second streamer on the object information page in response to a display trigger operation on the object information page, wherein the object information page is configured to present recommended objects corresponding to the first streamer.

In an optional implementation, the recommended objects corresponding to the second streamer include an object being demonstrated in a live streaming room of the second streamer or a live streaming object whose popularity data meets a first preset condition in the live streaming room.

In an optional implementation, the method further includes:
displaying, in response to a preset obtaining operation on a target recommended object in the recommended objects corresponding to the second streamer, an object obtaining page corresponding to the target recommended object, wherein the target recommended object is the object being demonstrated or the live streaming object whose popularity data meets the first preset condition, and the object obtaining page is used to perform an object obtaining operation for the target recommended object.

In an optional implementation, presenting the recommended objects corresponding to the second streamer on the object information page includes:
presenting, on the object information page, the object being demonstrated in the live streaming room of the second streamer in response to the object being demonstrated existing in the live streaming room of the second streamer currently; or
presenting, on the object information page, the live streaming object whose popularity data meets the first preset condition in the live streaming room of the second streamer in response to the object being demonstrated not existing in the live streaming room of the second streamer currently.

In an optional implementation, the recommended objects corresponding to the second streamer include a live streaming object in a live streaming room of the second streamer, and presenting the recommended objects corresponding to the second streamer on the object information page includes:
presenting a live streaming object list entry of the second streamer on the object information page; and
displaying a live streaming object list of the second streamer on the object information page in response to a trigger operation on the live streaming object list entry, wherein the live streaming object list includes the live streaming object in the live streaming room of the second streamer.

In an optional implementation, displaying the live streaming object list of the second streamer on the object information page in response to the trigger operation on the live streaming object list entry includes:
displaying an object list panel corresponding to the second streamer on the object information page and displaying the live streaming object list of the second streamer on the object list panel in response to the trigger operation on the live streaming object list entry, wherein a display area of the object list panel is not greater than a display area of the object information page, and the live streaming object list is used to trigger an object obtaining operation on the live streaming object in the live streaming room of the second streamer.

In an optional implementation, after displaying the object list panel corresponding to the second streamer on the object information page and displaying the live streaming object list of the second streamer on the object list panel in response to the trigger operation on the live streaming object list entry, the method further includes:
pulling up and displaying the object list panel corresponding to the second streamer on the object information page in response to a preset pull-up operation on the object list panel corresponding to the second streamer.

In an optional implementation, the recommended objects corresponding to the second streamer further include a target live streaming object corresponding to the second streamer, wherein the target live streaming object corresponding to the second streamer are displayed at the live streaming object list entry of the second streamer on the object information page, the target live streaming object is a live streaming object whose popularity data meets a second preset condition or whose presentation positions meet a third preset condition in the live streaming object list of the second streamer, and the live streaming object list entry is used to trigger display of the live streaming object list of the second streamer.

In an optional implementation, presenting the recommended objects corresponding to the second streamer on the object information page includes:
displaying, in a first region of the object information page, the object being demonstrated in the live streaming room of the second streamer or the live streaming object whose popularity data meets the first preset condition in the live streaming room; and
displaying the live streaming object list entry of the second streamer in a second region of the object information page, wherein the target live streaming object corresponding to the second streamer is displayed at the live streaming object list entry, and the first region and the second region are displayed sequentially adjacent to each other and are both located after a presentation position of an object being demonstrated in a live streaming room of the first streamer.

In an optional implementation, the recommended objects corresponding to the second streamer include a live streaming room activity object, and presenting the recommended objects corresponding to the second streamer on the object information page includes:
presenting the live streaming room activity object of the second streamer on the object information page, wherein the live streaming room activity object is configured to trigger an interactive operation for a preset live streaming room activity of the second streamer.

In an optional implementation, the recommended objects corresponding to the second streamer include a streamer-associated object, the streamer-associated object is an object establishing an association relationship with the second streamer in advance.

In an optional implementation, presenting the recommended objects corresponding to the second streamer on the object information page includes:
presenting an associated object list entry corresponding to the second streamer on the object information page; and
presenting the streamer-associated object corresponding to the second streamer on the object information page in response to a trigger operation on the associated object list entry.

In an optional implementation, presenting the recommended objects corresponding to the second streamer on the object information page includes:
presenting the recommended objects corresponding to the second streamer at a preset position on the object information page, wherein the preset position includes an adjacent next position to a presentation position of an object being demonstrated in the live streaming room of the first streamer, or a second position in a live streaming object list of the first streamer.

In an optional implementation, an object display control is set on the live streaming room page, and displaying the object information page on the live streaming room page in response to the trigger operation on the object information page includes:
displaying the object information page on the live streaming room page in response to a trigger operation on the object display control, wherein a live streaming object in the live streaming room of the first streamer is presented on the object information page.

According to a second aspect, the present disclosure provides a live streaming processing apparatus. The apparatus includes:
a first display module, configured to display a live streaming room page of a first streamer, wherein a connected video image of the first streamer and at least one second streamer is presented on the live streaming room page; and
a first presentation module, configured to display an object information page on the live streaming room page and present recommended objects corresponding to the second streamer on the object information page in response to a display trigger operation on the object information page, wherein the object information page is configured to present recommended objects corresponding to the first streamer.

According to a third aspect, the present disclosure provides a computer-readable storage medium, wherein the computer-readable storage medium stores instructions therein, and the instructions, when executed on a terminal device, cause the terminal device to implement the method described above.

According to a fourth aspect, the present disclosure provides a live streaming processing device. The device includes: a memory, a processor, and a computer program stored on the memory and executable on the processor, wherein the processor, when executing the computer program, implements the method described above.

According to a fifth aspect, the present disclosure provides a computer program product. The computer program product includes a computer program/instruction. The computer program/instruction, when executed by a processor, causes the method described above to be implemented.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a flowchart of a live streaming processing method according to an embodiment of the present disclosure;
FIG. 2 is a schematic diagram of a live streaming room page according to an embodiment of the present disclosure;
FIG. 3 is a schematic diagram of another live streaming room page according to an embodiment of the present disclosure;
FIG. 4 is a schematic diagram of another live streaming room page according to an embodiment of the present disclosure;
FIG. 5 is a schematic diagram of still another live streaming room page according to an embodiment of the present disclosure;
FIG. 6 is a schematic structural diagram of a live streaming processing apparatus according to an embodiment of the present disclosure; and
FIG. 7 is a schematic structural diagram of a live streaming processing device according to an embodiment of the present disclosure.

### DETAILED DESCRIPTION OF EMBODIMENTS

For a clearer understanding of the above objectives, features and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

In the field of e-commerce, it has become increasingly common for a streamer to connect with other streamers during live streaming. With the current streamer connection feature, while a viewer is watching a streamer-connected live streaming video in a current live streaming room, if the viewer wants to view information related to a live streaming room of a connected peer streamer, such as viewing a live streaming object list of the connected peer streamer, the viewer needs to exit the current live streaming room, and then enter the live streaming room of the connected peer streamer in order to view such information, which involves a relatively long operation path, resulting in low operational efficiency.

In view of this, an embodiment of the present disclosure provides a live streaming processing method. First, a live streaming room page of a first streamer is displayed, wherein a connected video image of the first streamer and at least one second streamer is presented on the live streaming room page. In response to a display trigger operation on an object information page, the object information page is displayed on the live streaming room page and recommended objects corresponding to the second streamer are presented on the object information page, wherein the object information page is configured to present recommended objects corresponding to the first streamer. It can be learned that, in the streamer-connected live streaming scenario, the embodiments of the present disclosure allow the viewer to view the recommended objects corresponding to the connected peer streamer in the live streaming room of the current streamer by displaying the recommended objects corresponding to the connected peer streamer on the live streaming room page of the current streamer, without the need for the viewer to exit the current live streaming room and then enter the live streaming room of the connected peer streamer, thereby shortening the operation path for the viewer in the current live streaming room to view the recommended objects of the connected peer streamer, and improving operational efficiency.

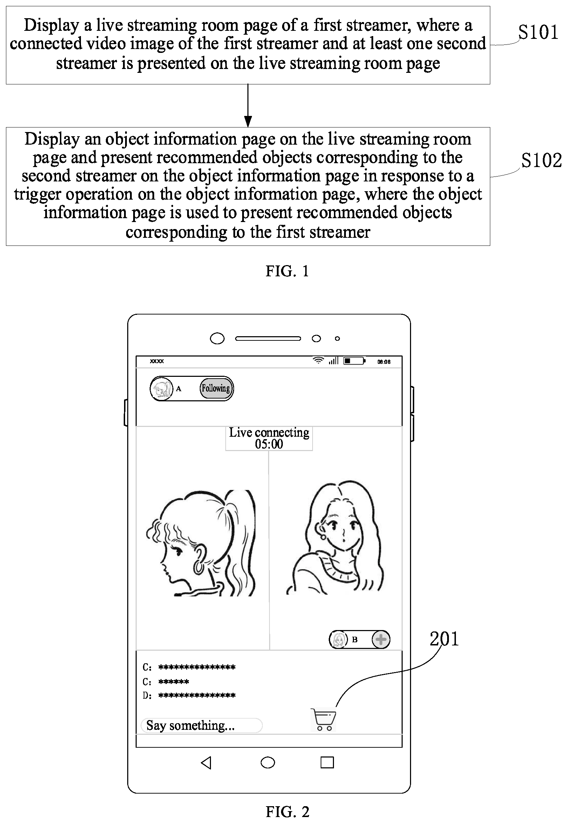

Based on this, an embodiment of the present disclosure provides a live streaming processing method. FIG. 1 is a flowchart of a live streaming processing method according to an embodiment of the present disclosure. The method specifically includes the following steps.

S101: A live streaming room page of a first streamer is displayed.

Here, a connected video image of the first streamer and at least one second streamer is presented on the live streaming room page.

In this embodiment of the present disclosure, the first streamer is a streamer of a live streaming room wherein a current viewer is located. That is, the current viewer has entered the live streaming room of the first streamer, wherein the live streaming room of the first streamer is in a live streaming state and is in a state of being connected for live streaming with another streamer.

In this embodiment of the present disclosure, the connected video image of the first streamer and at least one second streamer is presented on the live streaming room page of the first streamer, wherein the second streamer may be any streamer who is currently connected for live streaming with the first streamer, that is, a connected peer streamer. It should be noted that the first streamer may be connected for live streaming with one second streamer, or may be connected for live streaming with a plurality of second streamers at a time.

S102: An object information page on the live streaming room page is displayed and recommended objects corresponding to the second streamer is presented on the object information page in response to a display trigger operation on the object information page.

Here, the object information page is used to present recommended objects corresponding to the first streamer.

In this embodiment of the present disclosure, the display trigger operation on the object information page may include a preset swipe operation, a click operation, a double-click operation, etc. performed on the live streaming room page, for triggering the display of the object information page on the live streaming room page.

In an optional implementation, an object display control is set on the live streaming room page. When a trigger operation on the object display control is received, the object information page is displayed on the live streaming room page, and the recommended objects corresponding to the first streamer are presented on the object information page, wherein the object display control is configured to trigger the presentation of the object information page on the live streaming room page.

FIG. 2 is a schematic diagram of a live streaming room page of the first streamer according to an embodiment of the present disclosure. It is assumed that the live streaming room page is a live streaming room page of a streamer A, and the streamer A is connecting for live streaming with a streamer B (the second streamer), wherein the streamer B is also in a live streaming state. The connected video image of the streamer A and the streamer B is presented on the live streaming room page of the streamer A, such as the live streaming room page shown in FIG. 2. Moreover, an object display control 201 is further displayed on the live streaming room page.

In an optional implementation, when a trigger operation on the object display control on the live streaming room page is received, the object information page is displayed on the live streaming room page, and the recommended objects corresponding to the second streamer and the recommended objects corresponding to the first streamer are presented on the object information page.

In this embodiment of the present disclosure, the recommended objects corresponding to the second streamer are presented on the object information page, and a display position for the recommended objects corresponding to the second streamer is not limited in this embodiment of the present disclosure.

To facilitate the viewer in viewing the recommended objects in the live streaming room of the connected peer streamer, in an optional implementation, the recommended objects corresponding to the second streamer are presented at a preset position on the object information page. Here, the preset position includes an adjacent next position to a presentation position of an object being demonstrated in the live streaming room of the first streamer, or a second position in a live streaming object list of the first streamer.

In this embodiment of the present disclosure, the recommended objects corresponding to the first streamer may include a live streaming object in the live streaming room of the first streamer (i.e., the current live streaming room), which can be presented in the form of the live streaming object list.

In this embodiment of the present disclosure, the recommended objects corresponding to the second streamer may include various types of recommended objects related to the second streamer, such as a live streaming object in the live streaming room of the second streamer (e.g., live streaming product objects, etc.), a live streaming room activity object, or such as an object establishing an association relationship with the second streamer (e.g., showcase product objects, etc.) in advance.

In an optional implementation, in the case wherein the live streaming room activity object (e.g., of claiming live streaming coupons) exists in the live streaming room of the second streamer who is in the state of being connected for live streaming with the first streamer, the live streaming room activity object of the second streamer may be presented on the object information page corresponding to the first streamer, wherein the live streaming room activity object is configured to trigger an interactive operation for a preset live streaming room activity of the second streamer. That is to say, the live streaming room activity object may be configured to enable the viewer in the current live streaming room of the first streamer to trigger the interactive operation on the live streaming room activity object of the second streamer, such that the viewer in the current live streaming room of the first streamer can participate in the live streaming room activity of the connected peer streamer without exiting the current live streaming room.

Specifically, when a trigger operation on the live streaming room activity object of the second streamer that is presented on the object information page is received, a related page of the live streaming room activity object of the second streamer may be displayed on the live streaming room page of the first streamer, such that the viewer in the current live streaming room of the first streamer can participate in the live streaming room activity in the live streaming room of the second streamer through the displayed related page.

In the live streaming processing method provided in the embodiments of the present disclosure, first, the live streaming room page of the first streamer is displayed, wherein the connected video image of the first streamer and the at least one second streamer is presented on the live streaming room page. In response to the display trigger operation on the object information page, the object information page is displayed on the live streaming room page and the recommended objects corresponding to the second streamer are presented on the object information page, wherein the object information page is configured to present the recommended objects corresponding to the first streamer. It can be learned that, in the streamer-connected live streaming scenario, the embodiments of the present disclosure allow the viewer to view the recommended objects corresponding to the connected peer streamer in the live streaming room of the current streamer by displaying the recommended objects corresponding to the connected peer streamer on the live streaming room page of the current streamer, without the need for the viewer to exit the current live streaming room and then enter the live streaming room of the connected peer streamer, thereby shortening the operation path for the viewer in the current live streaming room to view the recommended objects of the connected peer streamer, and improving operational efficiency.

In practical applications, to enable the viewer in the live streaming room of the first streamer to view the recommended objects in the live streaming room of the connected peer streamer (i.e., the second streamer), the embodiments of the present disclosure may allow the live streaming objects in the live streaming room of the second streamer to be displayed on the object information page corresponding to the first streamer, wherein the live streaming objects may be, for example, live streaming product objects, live streaming local life service objects, etc.

In an optional implementation, the recommended objects corresponding to the second streamer and presented on the object information page corresponding to the first streamer may include an object being demonstrated in the live streaming room of the second streamer, or a live streaming object whose popularity data meets a first preset condition in the live streaming room of the second streamer.

In practical applications, in the case wherein a live streaming object that is being demonstrated exists in the current live streaming room of the second streamer who is in a state of being connected for live streaming with the first streamer, the live streaming object that is being demonstrated in the live streaming room of the second streamer may be presented on the object information page corresponding to the first streamer, such that the viewer in the live streaming room of the first streamer can view the live streaming object that is being demonstrated in the live streaming room of the second streamer without exiting the current live streaming room.

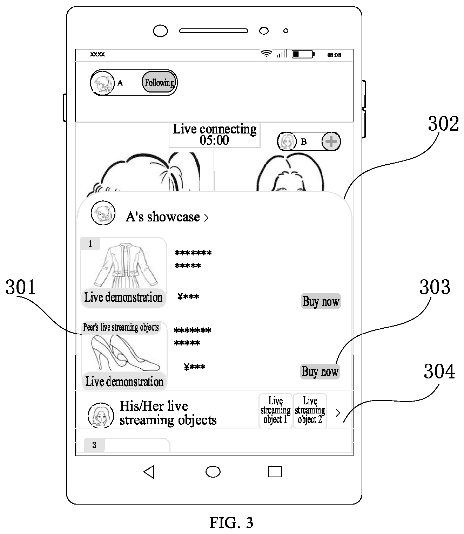

FIG. 3 is a schematic diagram of a live streaming room page of the first streamer according to an embodiment of the present disclosure. It is assumed that the live streaming room page is the live streaming room page of the streamer A, and an object information page 302 corresponding to the first streamer is displayed on the live streaming room page in response to a display trigger operation on an object information page. In the case wherein the live streaming object that is being demonstrated exists in the live streaming room of the second streamer, both the recommended objects corresponding to the first streamer and a live streaming object 301 that is being demonstrated in the live streaming room of the second streamer are presented on the object information page 302.

In an optional implementation, in the case wherein the live streaming object that is being demonstrated does not exist in the current live streaming room of the second streamer, when the object information page corresponding to the first streamer is displayed on the live streaming room page of the first streamer, the live streaming object whose popularity data meets the first preset condition in the live streaming room of the second streamer may be presented on the object information page.

Here, the live streaming object whose popularity data meets the first preset condition in the live streaming room of the streamer may include, for example, a live streaming object with the highest purchase quantity, a live streaming object with the highest view count, etc. Here, the popularity data may be associated with the live streaming object, and is used to reflect the live streaming performance of the live streaming object, such as the degree of popularity thereof in the live streaming room. Specifically, the popularity data may be purchase quantity (also referred to as sales volume), etc. The first preset condition may be preset as needed.

Presenting, on the object information page of the first streamer, the object that is being demonstrated in the live streaming room of the second streamer or the live streaming object whose popularity data meets the first preset condition in the live streaming room of the second streamer allows the viewer in the live streaming room of the first streamer to view the live streaming object in the live streaming room of the connected peer streamer in the current live streaming room, without the need for the viewer to exit the live streaming room of the first streamer and then enter the live streaming room of the connected peer streamer, thereby shortening the operation path for the viewer in the current live streaming room to view the live streaming object of the connected peer streamer, and improving operational efficiency.

In the embodiments of the present disclosure, the recommended objects corresponding to the second streamer include the live streaming objects in the live streaming room of the second streamer. During presentation of the live streaming objects of the connected peer streamer in the live streaming room of the first streamer, the viewer is enabled to trigger, in the current live streaming room, an object obtaining operation on the live streaming objects in the live streaming room of the connected peer streamer, thereby implementing interconnection of the live streaming objects between the two connected live streaming rooms.

Specifically, when a preset obtaining operation performed by the viewer on a target recommended object in the recommended objects corresponding to the second streamer is received, an object obtaining page corresponding to the target recommended object is displayed on the live streaming room page of the first streamer, wherein the target recommended object is the object being demonstrated in the live streaming room of the second streamer, or the live streaming object whose popularity data meets the first preset condition in the live streaming room. Here, the object obtaining page is used to trigger the object obtaining operation for the target recommended object.

In an optional implementation, when a trigger preset obtaining operation of the viewer on the target recommended object is received, the object obtaining page corresponding to the target recommended object is pulled up from the bottom of the live streaming room page of the first streamer.

In the embodiments of the present disclosure, for display of the object obtaining page, a display area of the object obtaining page in the embodiments of the present disclosure may be less than a display area of the live streaming room page of the first streamer, in order to ensure that the object obtaining page does not obstruct the connected video image of the first streamer and the second streamer. For example, the object obtaining page may be a half-screen panel, etc.

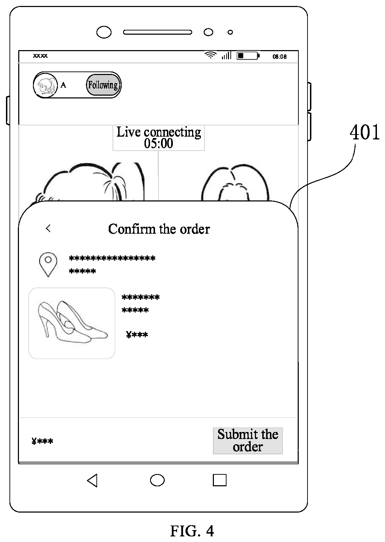

FIG. 4 is a schematic diagram of another live streaming room page of the first streamer according to an embodiment of the present disclosure. The live streaming room page is the live streaming room page of the first streamer. When a preset trigger operation on the target recommended object in the recommended objects corresponding to the second streamer is received, the object obtaining page corresponding to the target recommended object, such as an object obtaining page 401 on the live streaming room page as shown in FIG. 4, is pulled up and displayed from the bottom of the live streaming room page. On the object obtaining page 401, the object obtaining operation on the target recommended object is triggered, such as a purchase operation on the target recommended object on the live streaming room page as shown in FIG. 4.

In this embodiment of the present disclosure, presenting the recommended objects corresponding to the connected peer streamer on the object information page of the first streamer allows the viewer to purchase the recommended object in the live streaming room of the connected peer streamer without the need for the viewer to exit the current live streaming room and then enter the live streaming room of the connected peer streamer, thereby implementing interconnection of the recommended objects between the two connected live streaming rooms and improving user experience.

In practical applications, the recommended objects corresponding to the second streamer and presented on the live streaming room page of the first streamer may include the live streaming object in the live streaming room of the second streamer.

In an optional implementation, not only is a live streaming object of the first streamer displayed on the object information page of the first streamer, but a live streaming object list entry of the second streamer is also displayed on the object information page of the first streamer. In response to a trigger operation on the live streaming object list entry, a live streaming object list of the second streamer is displayed on the object information page, wherein the live streaming object list includes the live streaming object in the live streaming room of the second streamer.

In the embodiments of the present disclosure, displaying the live streaming object list of the second streamer on the object information page may include opening the live streaming object list of the second streamer downward from the live streaming object list entry on the object information page of the first streamer to directly present the live streaming object list of the second streamer on the object information page. By tapping the live streaming object list entry, the live streaming object list of the second streamer may be triggered to be collapsed back to the live streaming object list entry, thereby enabling the hiding of the live streaming object list of the second streamer.

In another optional implementation, the live streaming object list entry of the second streamer is presented on the object information page corresponding to the first streamer, such as a live streaming object list entry 304 of the second streamer presented on the live streaming room page as shown above in FIG. 3. When a trigger operation performed by the viewer on the live streaming object list entry is received, an object list panel for the second streamer is displayed on the object information page of the first streamer, and the live streaming object list of the second streamer is presented on the object list panel, that is, the live streaming object list includes the live streaming objects in the live streaming room of the second streamer.

In addition, in the embodiments of the present disclosure, the live streaming object list of the second streamer maintains synchronized presentation and demonstration progress between the live streaming room page of the first streamer and the live streaming room page of the second streamer, that is, the explanation progress of the live streaming objects on the live streaming object list is presented in real-time.

In an optional implementation, when the trigger operation performed by the viewer on the live streaming object list entry in the live streaming room of the second streamer is received, the object list panel corresponding to the second streamer is displayed on the object information page of the first streamer, and the live streaming object list of the second streamer is displayed on the object list panel, wherein a display area of the object list panel corresponding to the second streamer is not greater than a display area of the object information page of the first streamer.

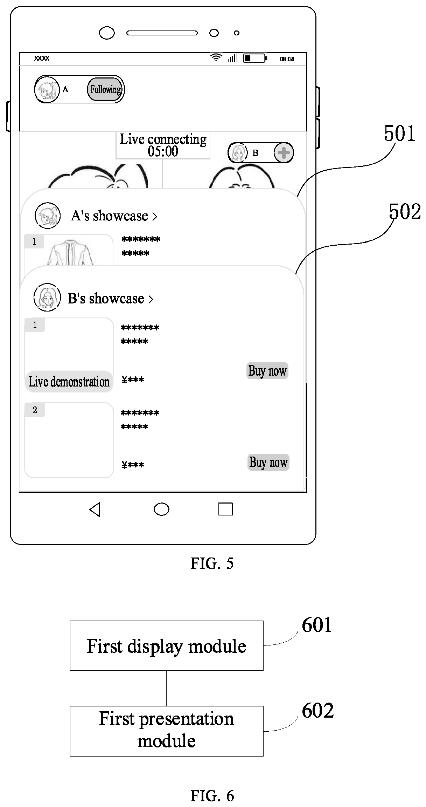

FIG. 5 is a schematic diagram of a live streaming room page of the first streamer according to an embodiment of the present disclosure. When a trigger operation on the live streaming object list entry of the second streamer is received, the live streaming room page shown above in FIG. 3 switches to display as the live streaming room page shown in FIG. 5. That is, on the object information page corresponding to the first streamer, the object list panel corresponding to the second streamer is pulled up and displayed, wherein an object information page 501 for the first streamer and an object list panel 502 that corresponds to the second streamer are displayed on the live streaming room page shown in FIG. 5, wherein the display area of the object list panel corresponding to the second streamer is less than the display area of the object information page of the first streamer.

In an optional implementation, when a preset pull-up operation on the object list panel corresponding to the second streamer is received, the object list panel corresponding to the second streamer is pulled up and displayed on the object information page of the first streamer, wherein pulling up the object list panel corresponding to the second streamer may specifically include extending upward the object list panel corresponding to the second streamer for display, that is, increasing the display area of the object list panel.

In another optional implementation, when a preset close operation on the object list panel corresponding to the second streamer is received, the object list panel corresponding to the second streamer is hidden, and the object information page of the first streamer is displayed. Here, the preset close operation may include a swipe-down operation on the object list panel, a double-click operation on a blank region, etc.

In practical applications, the recommended objects corresponding to the second streamer and presented on the object information page of the first streamer may also include target live streaming objects corresponding to the second streamer. The target live streaming objects corresponding to the second streamer are displayed at the live streaming object list entry of the second streamer on the object information page.

Here, the target live streaming objects are live streaming objects whose popularity data meets a second preset condition or whose presentation positions meet a third preset condition in the live streaming object list of the second streamer, and the live streaming object list entry is used to trigger the display of the live streaming object list of the second streamer.

In this embodiment of the present disclosure, the popularity data is used to represent the degree of popularity of the live streaming object in the live streaming room. The target live streaming objects whose popularity data meets the second preset condition may include, for example, live streaming objects ranked in the top in terms of purchase quantity in the current live streaming room, and may also include live streaming objects ranked in the top in terms of user traffic in the live streaming room.

In this embodiment of the present disclosure, the presentation positions are positions of the live streaming objects in the live streaming object list of the second streamer. The live streaming objects whose presentation positions meet the third preset condition may include, for example, live streaming objects ranked in the top three positions in the live streaming object list, etc. It should be noted that the first preset condition, the second preset condition, and the third preset condition may be preset according to user requirements. This is not limited in the embodiments of the present disclosure.

For example, on the live streaming room page as shown above in FIG. 3, the target live streaming objects corresponding to the second streamer are displayed at the live streaming object list entry of the second streamer on the object information page, such as a live streaming object 1 and a live streaming object 2 on the live streaming room page as shown in FIG. 3.

By pre-exposing the target live streaming objects in the live streaming room of the second streamer on the object information page of the first streamer, this embodiment of the present disclosure facilitates the viewer in previewing the target live streaming objects in the live streaming room of the connected peer streamer while remaining in the current live streaming room, thereby improving user experience.

In an optional implementation, the object that is being demonstrated in the live streaming room of the second streamer or the live streaming object whose popularity data meets the first preset condition in the live streaming room is displayed in a first region of the object information page of the first streamer; and the live streaming object list entry of the second streamer is displayed in a second region of the object information page of the first streamer, wherein the target live streaming objects corresponding to the second streamer are displayed at the live streaming object list entry.

In an optional implementation, the first region and the second region are displayed sequentially adjacent to each other and are both located after the presentation position of the object that is being demonstrated in the live streaming room of the first streamer. On the live streaming room page of the first streamer as shown in FIG. 3, an object 301 that is being demonstrated in the live streaming room of the second streamer is displayed in the first region, and the live streaming object list entry 304 of the second streamer is displayed in the second region, wherein the target live streaming objects corresponding to the second streamer are displayed at the live streaming object list entry. In addition, on the live streaming room page of the first streamer as shown above in FIG. 3, the first region and the second region of the object information page of the first streamer are displayed sequentially adjacent to each other and are both located after the presentation position of the object that is being demonstrated in the live streaming room of the first streamer.

In this embodiment of the present disclosure, the first region and the second region are provided on the object information page of the first streamer to display the recommended objects corresponding to the second streamer, allowing full showcase of the recommended objects corresponding to the second streamer and prompting of the viewer to view the recommended objects in the live streaming room of the connected peer streamer, thereby improving the viewer experience.

In this embodiment of the present disclosure, the recommended objects corresponding to the second streamer and presented on the object information page may include streamer-associated objects of the second streamer. Specifically, while the live streaming object list of the live streaming room of the second streamer is presented on the object information page, the streamer-associated objects of the second streamer may also be presented.

Here, the streamer-associated objects is an object establishing an association relationship in advance with the second streamer, such as recommended objects presented on a showcase page of the streamer.

In an optional implementation, the object information page is displayed on the live streaming room page of the first streamer, wherein an associated object list entry corresponding to the second streamer is presented on the object information page. When a trigger operation on the associated object list entry is received, the streamer-associated objects corresponding to the second streamer are presented on the object information page.

On the object information page of the live streaming room page as shown above in FIG. 5, the associated object list entry is presented to trigger the display of the streamer-associated objects of the second streamer, such that the viewer can purchase the streamer-associated objects of the connected peer streamer without the need for the viewer to exit the current live streaming room and then enter the live streaming room of the connected peer streamer, thereby improving user experience.

Based on the above-mentioned method embodiment, the present disclosure further provides a live streaming processing apparatus. FIG. 6 is a schematic structural diagram of a live streaming processing apparatus according to an embodiment of the present disclosure. The apparatus includes:

a first display module 601, configured to display a live streaming room page of a first streamer, wherein a connected video image of the first streamer and at least one second streamer is presented on the live streaming room page; and

a first presentation module 602, configured to display an object information page on the live streaming room page and present recommended objects corresponding to the second streamer on the object information page in response to a display trigger operation on the object information page, wherein the object information page is configured to present recommended objects corresponding to the first streamer.

In an optional implementation, the recommended objects corresponding to the second streamer include an object being demonstrated in a live streaming room of the second streamer or a live streaming object whose popularity data meets a first preset condition in the live streaming room.

In an optional implementation, the apparatus further includes:
a second display module, configured to display, in response to a preset trigger operation on a target recommended object in the recommended objects corresponding to the second streamer, an object obtaining page corresponding to the target recommended object, wherein the target recommended object is the object being demonstrated or the live streaming object whose popularity data meets the first preset condition, and the object obtaining page is used to perform an object obtaining operation for the target recommended object.

In an optional implementation, the first presentation module includes:
a first presentation sub-module, configured to present, on the object information page, the object being demonstrated in the live streaming room of the second streamer in response to the object being demonstrated existing in the live streaming room of the second streamer currently; or
a second presentation sub-module, configured to present, on the object information page, the live streaming object whose popularity data meets the first preset condition in the live streaming room of the second streamer in response to the object being demonstrated not existing in the live streaming room of the second streamer currently.

In an optional implementation, the recommended objects corresponding to the second streamer include a live streaming object in a live streaming room of the second streamer, and the first presentation module includes:
a third presentation sub-module, configured to present a live streaming object list entry of the second streamer on the object information page; and
a first display sub-module, configured to display a live streaming object list of the second streamer on the object information page in response to a trigger operation on the live streaming object list entry, wherein the live streaming object list includes the live streaming object in the live streaming room of the second streamer.

In an optional implementation, the first display sub-module is specifically configured to:
display an object list panel corresponding to the second streamer on the object information page and displaying the live streaming object list of the second streamer on the object list panel in response to the trigger operation on the live streaming object list entry, wherein a display area of the object list panel is not greater than a display area of the object information page, and the live streaming object list is used to trigger an object obtaining operation on the live streaming objects in the live streaming room of the second streamer.

In an optional implementation, the apparatus further includes:
a third display module, configured to pull up and display the object list panel corresponding to the second streamer on the object information page in response to a preset pull-up operation on the object list panel corresponding to the second streamer.

In an optional implementation, the recommended objects corresponding to the second streamer further include a target live streaming object corresponding to the second streamer, wherein the target live streaming object corresponding to the second streamer is displayed at the live streaming object list entry of the second streamer on the object information page, the target live streaming object is a live streaming objects whose popularity data meets a second preset condition or whose presentation positions meet a third preset condition in the live streaming object list of the second streamer, and the live streaming object list entry is used to trigger display of the live streaming object list of the second streamer.

In an optional implementation, the first presentation module includes:
a second display sub-module, configured to display, in a first region of the object information page, the object being demonstrated in the live streaming room of the second streamer or the live streaming object whose popularity data meets the first preset condition in the live streaming room;
a third display sub-module configured to display the live streaming object list entry of the second streamer in a second region of the object information page, wherein the target live streaming object corresponding to the second streamer is displayed at the live streaming object list entry, and the first region and the second region are displayed sequentially adjacent to each other and are both located after a presentation position of an object being demonstrated in a live streaming room of the first streamer.

In an optional implementation, the recommended objects corresponding to the second streamer include a live streaming room activity object, and the first presentation module includes:
a fourth presentation sub-module, configured to present the live streaming room activity object of the second streamer on the object information page, wherein the live streaming room activity object is configured to trigger an interactive operation for a preset live streaming room activity of the second streamer.

In an optional implementation, the recommended objects corresponding to the second streamer include a streamer-associated object, the streamer-associated object is an object establishing an association relationship with the second streamer in advance.

In an optional implementation, the first presentation module includes:
a fifth presentation sub-module, configured to present an associated object list entry corresponding to the second streamer on the object information page; and
a sixth presentation sub-module, configured to present the streamer-associated object corresponding to the second streamer on the object information page in response to a trigger operation on the associated object list entry.

In an optional implementation, the first presentation module includes:
a seventh presentation sub-module, configured to present the recommended objects corresponding to the second streamer at a preset position on the object information page, wherein the preset position includes an adjacent next position to a presentation position of an object being demonstrated in the live streaming room of the first streamer, or a second position in a live streaming object list of the first streamer.

In an optional implementation, an object display control is set on the live streaming room page, and the first presentation module includes:
a fourth display sub-module, configured to display the object information page on the live streaming room page in response to a trigger operation on the object display control, wherein a live streaming object in the live streaming room of the first streamer is presented on the object information page.

In the live streaming processing apparatus provided in the embodiments of the present disclosure, first, the live streaming room page of the first streamer is displayed, wherein the connected video image of the first streamer and the at least one second streamer is presented on the live streaming room page. In response to the display trigger operation on the object information page, the object information page is displayed on the live streaming room page and the recommended objects corresponding to the second streamer are presented on the object information page, wherein the object information page is used to present the recommended objects corresponding to the first streamer. It can be learned that, in the streamer-connected live streaming scenario, the embodiments of the present disclosure allow the viewer to view the recommended objects corresponding to the connected peer streamer in the live streaming room of the current streamer by displaying the recommended objects corresponding to the connected peer streamer on the live streaming room page of the current streamer, without the need for the viewer to exit the current live streaming room and then enter the live streaming room of the connected peer streamer, thereby shortening the operation path for the viewer in the current live streaming room to view the recommended objects of the connected peer streamer, and improving operational efficiency.

In addition to the method and apparatus described above, an embodiment of the present disclosure further provides a computer-readable storage medium having instructions stored therein. The instructions, when executed on a terminal device, cause the terminal device to implement the live streaming processing method described in the embodiments of the present disclosure.

An embodiment of the present disclosure further provides a computer program product. The computer program product includes a computer program or instructions. When the computer program or instructions, when executed by a processor, cause the live streaming processing method described in the embodiments of the present disclosure to be implemented.

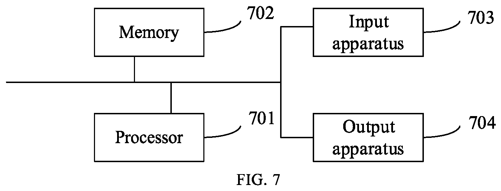

In addition, an embodiment of the present disclosure further provides a live streaming processing device. As shown in FIG. 7, the device may include:
a processor 701, a memory 702, an input apparatus 703, and an output apparatus 704. There may be one or more processors 701 in the live streaming processing device. For example, there is one processor in FIG. 7. In some embodiments of the present disclosure, the processor 701, the memory 702, the input apparatus 703, and the output apparatus 704 may be connected through a bus or in another manner, for example, are connected through the bus in FIG. 7.

The memory 702 may be configured to store a software program and a module. The processor 701 performs various functional applications of the live streaming processing device and processes data by executing the software program and the module stored in the memory 702. The memory 702 may mainly include a program storage area and a data storage area. The program storage area may store an operating system, an application required by at least one function, and the like. In addition, the memory 702 may include a high-speed random-access memory, and may further include a non-volatile memory, such as at least one magnetic disk storage device, a flash memory device, or other volatile solid-state storage devices. The input apparatus 703 may be configured to receive input numerical or character information, and generate a signal input related to a user setting and function control of the live streaming processing device.

Specifically, in this embodiment, the processor 701 may load an executable file corresponding to processes of one or more applications into the memory 702 according to the following instructions, and the processor 701 runs the applications stored in the memory 702, to implement various functions of the above-mentioned live streaming processing device.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. A live streaming processing method, comprising:
displaying a live streaming room page of a first streamer, wherein a connected video image of the first streamer and at least one second streamer is presented on the live streaming room page; and
displaying an object information page on the live streaming room page and presenting recommended objects corresponding to the second streamer on the object information page in response to a display trigger operation on the object information page, wherein the object information page is configured to present recommended objects corresponding to the first streamer.

2. The method according to claim 1, wherein the recommended objects corresponding to the second streamer comprise an object being demonstrated in a live streaming room of the second streamer or a live streaming object whose popularity data meets a first preset condition in the live streaming room.

3. The method according to claim 2, further comprising:
displaying, in response to a preset trigger operation on a target recommended object in the recommended objects corresponding to the second streamer, an object obtaining page corresponding to the target recommended object, wherein the target recommended object is the object being demonstrated or the live streaming object whose popularity data meets the first preset condition, and the object obtaining page is used to trigger an object obtaining operation for the target recommended object.

4. The method according to claim 2, wherein presenting the recommended objects corresponding to the second streamer on the object information page comprises:
presenting, on the object information page, the object being demonstrated in the live streaming room of the second streamer in response to the object being demonstrated existing in the live streaming room of the second streamer currently; or
presenting, on the object information page, the live streaming object whose popularity data meets the first preset condition in the live streaming room of the second streamer in response to the object being demonstrated not existing in the live streaming room of the second streamer currently.

5. The method according to claim 1, wherein the recommended objects corresponding to the second streamer comprise a live streaming object in a live streaming room of the second streamer, and presenting the recommended objects corresponding to the second streamer on the object information page comprises:
presenting a live streaming object list entry of the second streamer on the object information page; and
displaying a live streaming object list of the second streamer on the object information page in response to a trigger operation on the live streaming object list entry, wherein the live streaming object list comprises the live streaming object in the live streaming room of the second streamer.

6. The method according to claim 5, wherein displaying the live streaming object list of the second streamer on the object information page in response to the trigger operation on the live streaming object list entry comprises:
displaying an object list panel corresponding to the second streamer on the object information page and displaying the live streaming object list of the second streamer on the object list panel in response to the trigger operation on the live streaming object list entry, wherein a display area of the object list panel is not greater than a display area of the object information page, and the live streaming object list is used to trigger an object obtaining operation on the live streaming object in the live streaming room of the second streamer.

7. The method according to claim 6, wherein after displaying the object list panel corresponding to the second streamer on the object information page and displaying the live streaming object list of the second streamer on the object list panel in response to the trigger operation on the live streaming object list entry, the method further comprises:
pulling up and displaying the object list panel corresponding to the second streamer on the object information page in response to a preset pull-up operation on the object list panel corresponding to the second streamer.

8. The method according to any of claims 2 to 7, wherein the recommended objects corresponding to the second streamer further comprise a target live streaming object corresponding to the second streamer, wherein the target live streaming object corresponding to the second streamer is displayed at the live streaming object list entry of the second streamer on the object information page, the target live streaming object is a live streaming object whose popularity data meets a second preset condition or whose presentation positions meet a third preset condition in the live streaming object list of the second streamer, and the live streaming object list entry is used to trigger display of the live streaming object list of the second streamer.

9. The method according to claim 8, wherein presenting the recommended objects corresponding to the second streamer on the object information page comprises:
displaying, in a first region of the object information page, the object being demonstrated in the live streaming room of the second streamer or the live streaming object whose popularity data meets the first preset condition in the live streaming room; and
displaying the live streaming object list entry of the second streamer in a second region of the object information page, wherein the target live streaming object corresponding to the second streamer is displayed at the live streaming object list entry, and the first region and the second region are displayed sequentially adjacent to each other and are both located after a presentation position of an object being demonstrated in a live streaming room of the first streamer.

10. The method according to claim 1, wherein the recommended objects corresponding to the second streamer comprise a live streaming room activity object, and presenting the recommended objects corresponding to the second streamer on the object information page comprises:
presenting the live streaming room activity object of the second streamer on the object information page, wherein the live streaming room activity object is configured to trigger an interactive operation for a preset live streaming room activity of the second streamer.

11. The method according to claim 1, wherein the recommended objects corresponding to the second streamer comprise a streamer-associated object, the streamer-associated object is an object establishing an association relationship with the second streamer in advance.

12. The method according to claim 11, wherein presenting the recommended objects corresponding to the second streamer on the object information page comprises:
presenting an associated object list entry corresponding to the second streamer on the object information page; and
presenting the streamer-associated object corresponding to the second streamer on the object information page in response to a trigger operation on the associated object list entry.

13. The method according to claim 1, wherein presenting the recommended objects corresponding to the second streamer on the object information page comprises:
presenting the recommended objects corresponding to the second streamer at a preset position on the object information page, wherein the preset position comprises an adjacent next position to a presentation position of an object being demonstrated in the live streaming room of the first streamer, or a second position in a live streaming object list of the first streamer.

14. The method according to claim 1, wherein an object display control is set on the live streaming room page, and displaying the object information page on the live streaming room page in response to the display trigger operation on the object information page comprises:
displaying the object information page on the live streaming room page in response to a trigger operation on the object display control, wherein a live streaming object in the live streaming room of the first streamer is presented on the object information page.

15. A live streaming processing apparatus, comprising:
a first display module, configured to display a live streaming room page of a first streamer, wherein a connected video image of the first streamer and at least one second streamer is presented on the live streaming room page; and
a first presentation module, configured to display an object information page on the live streaming room page and present recommended objects corresponding to the second streamer on the object information page in response to a display trigger operation on the object information page, wherein the object information page is configured to present recommended objects corresponding to the first streamer.

16. A computer-readable storage medium, wherein instructions are stored in the computer-readable storage medium, the instructions, when executed on a terminal device, cause the terminal device to implement the method according to any of claims 1 to 14.

17. A live streaming processing device, comprising: a memory, a processor, and a computer program stored on the memory and executable on the processor, wherein the processor, when executing the computer program, implements the method according to any of claims 1 to 14.
